# EUROPÄISCHE PATENTSCHRIFT

(11) **EP 1 088 719 B1**
(45) Veröffentlichungstag und Bekanntmachung des Hinweises auf die Patenterteilung: **07.06.2006**
(21) Anmeldenummer: 00120109.4
(22) Anmeldetag: 19.09.2000
(51) Int. Cl.: B60S 1/34

(54) **Wischer für Kraftfahrzeug**
Wiper for vehicle
Essuie-glace pour véhicule

(30) Priorität: 29.09.1999 DE 19946630
(43) Veröffentlichungstag der Anmeldung: 04.04.2001
(73) Patentinhaber: Volkswagen Aktiengesellschaft, 38436 Wolfsburg (DE)
(72) Erfinder: Ostrowski, Wolfgang, 38446 Wolfsburg (DE)
(74) Vertreter: Rabe, Andreas

(56) Entgegenhaltungen:
- EP-A- 0 539 550
- FR-A- 2 684 343
- US-A- 2 348 502
- US-A- 2 952 864

## Beschreibung

Die Erfindung betrifft einen Wischer für eine Scheibe eines Kraftfahrzeugs und insbesondere die Wasserdurchführung bei einem Wischer. Der Wischer umfaßt eine Wischerwelle auf einem Wischarm, die drehsicher befestigbar ist, wobei die Wischerwelle eine durchgehende axiale Bohrung aufweist, die mit mindestens einer Versorgungsleitung in dem Wischarm verbunden ist, so daß wenigstens einer Waschdüse Waschflüssigkeit zuführbar ist.

Eine Scheibenreinigungsanlage mit einem derartigen Aufbau ist aus EP 0 539 550 bekannt. Die Scheibenreinigungsanlage umfaßt eine Wischerwelle auf einem Wischarm, die drehsicher befestigbar ist und die eine durchgehende axiale Bohrung zur Aufnahme einer Leitung aus formstabilem Kunststoff mit mindestens einem Kanal aufweist, über den Waschflüssigkeit wenigstens einer, während des Wischvorgangs mit dem Wischarm pendelnden Waschdüse zuführbar ist. Die Leitung ist an wischarmabgelegenen Ende der Wischerwelle in deren Drehrichtung formschlüssig mit der Wischerwelle verbunden.

Ein Nachteil dieses Standes der Technik ist jedoch, daß der Wischer bei der Montage genau positioniert werden muß, damit die Bohrungen ineinander übergehen.

Des weiteren ist ein Wischer aus FR 2 735 735 bekannt. Die in dieser Schrift beschriebene Reinigungsvorrichtung für eine Kraftfahrzeugscheibe umfaßt einen Scheibenwischer, der sich longitudinal im wesentlichen parallel zu der Ebene der Scheibe erstreckt und über einen Antriebskopf an einer Antriebswelle befestigt ist, die sich im wesentlichen senkrecht zu er Ebene der Scheibe erstreckt, so daß der Körper des Antriebskopfes eine Stützfläche aufweist, die gegen eine komplementäre Auflagefläche der Antriebswelle gedrückt wird und der Antriebskopf eine Innenleitung für die Versorgung einer Sprühvorrichtung an dem Scheibenwischer mit einem Reinigungsmittel umfaßt. Der Körper des Antriebskopfes umfaßt dabei einen Innenkanal, dessen erstes Ende mit der Innenleitung verbunden ist und dessen zweites Ende mit der Sprühvorrichtung verbunden ist.

Der Aufbau nach diesem Stand der Technik ist jedoch aufwendig und damit kostenintensiv. Aus der FR 2684343 ist ein Wischer nach dem Oberbegriff des Anspruchs 1 bekannt. Des Weiteren ist aus der US 2,952,864 ein Wischer bekannt, bei dem in einer Wischervvelle eine Durchgangsbohrung für Waschflüssigkeit vorgesehen ist. Das Ende der Wischervvelle läuft konisch zu und besitzt eine umlaufende Nut, die in Verbindung mit der Durchgangsbohrung für die Waschflüssigkeit steht. Auf das konische Ende ist ein Kragen mit einer Leitung aufgesetzt, die in der Nut mündet. Das Ende der Leitung besitzt eine Düse. um Waschflüssigkeit auf die Scheibe zu spritzen. Der Kragen und die Leitung sind unabhängig von dem Wischarm angeordnet.

Ein Weiterer Wischer ist aus dem Dokument US-A-2348502 bekannt und weist eine Wischerwelle mit einem radialen Kanal auf, welcher in einen in einem Wischarm zwischen zwei keilartigen Elementen ausgebildeten Ringkanal mündet.

Aufgabe der Erfindung ist es daher, einen Wischer zu schaffen, der kostengünstig herzustellen und zu montieren ist.

Diese Aufgabe wird gelöst durch einen Wischer mit den Merkmalen nach Anspruch 1. Bevorzugte Ausführungsformen sind Gegenstand der Unteransprüche.

Der Erfindungsgedanke beruht darauf, einen wenigstens teilweise umlaufenden Ringkanal an dem Übergang zwischen Wischerwelle und Wischarm vorzusehen, in den die Versorgungsleitung des Wischarms mündet. Dadurch entfällt einerseits eine exakte Ausrichtung des Wischarms in Bezug auf die Wischerwelle, was den Montageaufwand und damit die Montagekosten reduziert. Andererseits werden durch den einfachen Aufbau der Wischwasserzufuhr zu einer Düse in dem Wischarm zusätzliche Dichtelemente eingespart, so daß die Zuverlässigkeit und weitgehende Wartungsfreiheit der Wischwasserufuhr sichergestellt ist.

Vorzugsweise wird ein erster Dichtungsring über und ein zweiter Dichtungsring unter dem Ringkanal angeordnet, so daß ein Lecken der Waschflüssigkeit zwischen Wischerwelle und Wischarm mit noch größerer Zuverlässigkeit vermieden wird.

Zum besseren Antrieb des Wischarms durch die Wischerwelle ist das freie Ende der Wischerwelle bei einer bevorzugten Ausführungsform der Erfindung mit einem Zahnkranz versehen, in das ein komplementärer Zahnkranz in der trichterförmigen Öffnung des Wischarms eingreift.

Ein Vorteil der Erfindung besteht darin, daß im Durchtrittsbereich von Wischarm und Wischerwelle eine verschlauchungsfreie Wasserführung ermöglicht wird. Es ist keine nachträgliche Steckung notwendig, es sind keine zusätzlichen Schläuche erforderlich, und in der Kopplungsstelle entfallen die beim Stand der Technik notwendigen Dichtelemente.

Weitere Merkmale und Vorteile der Erfindung ergeben sich aus der folgenden Beschreibung von Ausführungsbeispielen, wobei Bezug genommen wird auf die beigefügten Zeichnungen.
Fig. 1 zeigt eine Ausführungsform der Erfindung in der Gesamtansicht.
Fig. 2 zeigt einen vergrößerten Ausschnitt aus Fig. 1.

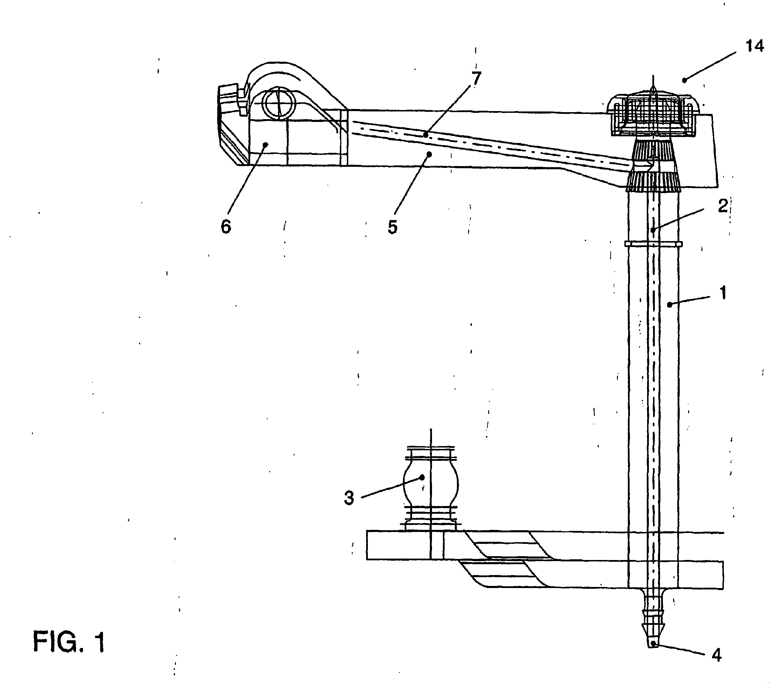

Der Wischer nach Fig. 1 umfaßt einen Wischarm 5, der auf einer Wischerwelle 1 drehsicher befestigt ist. An dem freien Ende des Wischarms 5 ist mindestens eine Waschdüse 6 angebracht, über die beim Wischen zur Reinigung einer (nicht dargestellten) Scheibe eines Kraftfahrzeugs Waschflüssigkeit auf die Scheibe gesprüht wird. Zur Versorgung der Waschdüse bzw. Waschdüsen 6 an dem freien Ende des Wischarms weist die Wischerwelle 1 eine durchgehende axiale Bohrung 2 auf. Über die axiale Bohrung 2 wird Waschflüssigkeit zu dem Wischarm gebracht. Die axiale Bohrung 2 ist mit mindestens einer Versorgungsleitung 7 in dem Wischarm 5 verbunden, die ihrerseits mit der einen oder mit den mehreren Waschdüsen 6 verbunden sind.

Um einen stabilen Antrieb zu gewährleisten, ist in der Ausführungsform des Wischers nach Fig. 1 eine Verschraubung 14 von Wischarm 5 und Wischerwelle 1 vorgesehen. Die Verschraubung 14 preßt den Wischarm 5 gegen die Wischerwelle 1, so daß ein guter Kraftschluß zwischen beiden zustande kommt.

Ein Problem bei der Herstellung und Montage dieser Wischer nach dem Stand der Technik besteht darin, die Waschflüssigkeit von der axialen Bohrung 2 in die Versorgungsleitung 7 in dem Wischarm 5 zu bringen. Bisher mußte dazu eine Schlauchverbindung oder eine Steckverbindung eingerichtet werden, wobei darauf geachtet werden mußte, daß der Wischarm 5 beim Aufstecken auf die Wischerwelle 1 richtig ausgerichtet war, da sonst die Verbindung zwischen der axialen Bohrung 2 - gegebenenfalls mit einer Verlängerung oder einem Schlauchstück - und der Versorgungsleitung 7 in dem Wischarm 5 nicht hergestellt werden konnte oder ein Leck entstand. Der Übergang zwischen der axialen Bohrung 2 in der Wischerwelle 1 und der Versorgungsleitung 7 in dem Wischarm 5 muß außerdem beim Stand der Technik abgedichtet werden.

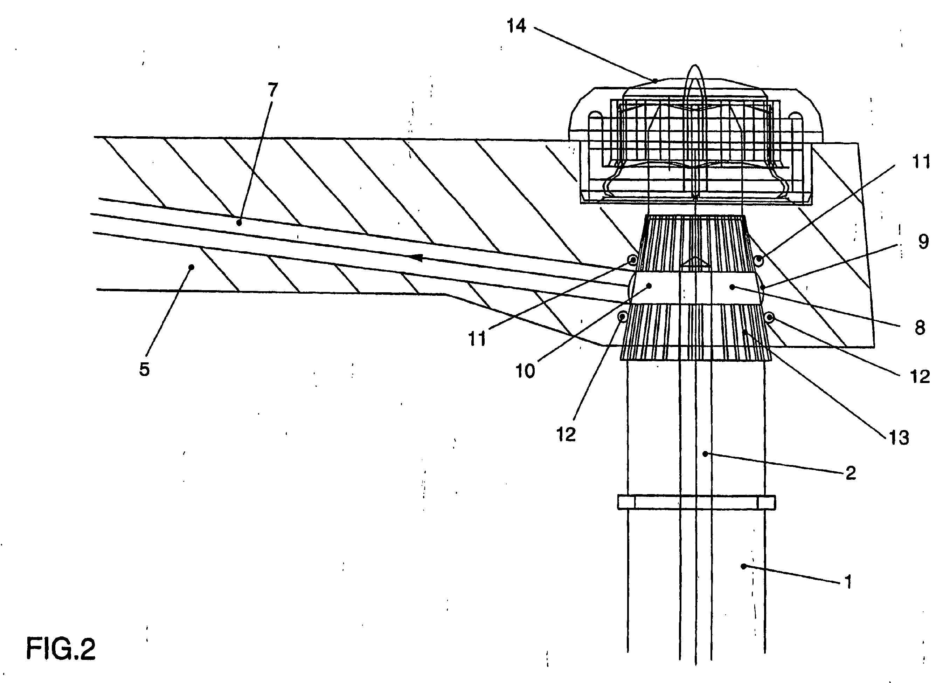

Bei dem erfindungsgemäßen Aufbau des Wischers ist dagegen die Wasserdurchführung zwischen Wischerwelle und Wischarm ohne Dichtelemente möglich. Dies wird wie im folgenden mit Bezug auf Fig. 2 erläutert dadurch erreicht, daß die Wischerwelle 1 an ihrem freien Ende konisch zuläuft und eine erste Nut 8 aufweist. Der Wischarm 5 läuft an seinem Befestigungsende komplementär zu der Wischerwelle 1 zu, d.h. er läuft trichterförmig zu. Wie aus Fig. 2 ersichtlich weist entsprechend zu der Wischerwelle 1 der Wischarm 5 eine zweite Nut 9 auf, die sich in derselben Höhe wie die erste Nut 8 der Wischerwelle 1 befindet. In die zweite Nut 9 des Wischarms 5 mündet die Versorgungsleitung 7 des Wischarms. Bei einem Zusammensetzen von Wischerweile 1 und Wischarm 5 bilden die erste 8 und die zweite Nut 9 somit einen wenigstens teilweise umlaufenden Ringkanal 10 in der Verbindungsfläche von Wischerwelle 1 und Wischarm 5. In den so geschaffenen Ringkanal 10 mündet die Versorgungsleitung 7 in dem Wischarm 5. Somit ist eine wasserführende Verbindung zwischen Wischarm 5 und Wischerwelle 1 geschaffen, bei der eine (nicht gezeigte) Durchgangsbohrung durch die Wischerwelle mit seitlichem Austritt innerhalb des Befestigungskonus einen wenigstens teilweise umlaufenden Ringkanal 10 zur Wasserdurchführung und damit auch die Versorgungsleitung 7 im Wischarm 5 versorgt.

In der Ausführungsform der Erfindung nach Fig. 2 ist die erste Nut 8 in den konisch zulaufenden Kopfbereich der Wischerwelle 1 gefräst, so daß sich eine Aussparung ergibt, die im Querschnitt trapezförmig ist. Die zweite Nut 9 in dem Wischarm hat dagegen in der gezeigten Ausführungsform die Form einer Rinne, in Fig. 2 angedeutet durch eine nach außen gebogene Linie. Für den Fachmann sind weitere Formen denkbar, die er je nach Anforderung statt der gezeigten Querschnitte verwenden kann.

Grundsätzlich ist durch das Zusammensetzen der paßgenauen Flächen von Wischerwelle 1 und Wischarm 5 der Ringkanal 10 bereits sehr gut abgedichtet, insbesondere wenn Wischarm 5 und Wischerwelle 1 durch ein Anziehen der Verschraubung 14 fest gegeneinander gedrückt werden. Damit aber über die Verbindungsfläche zwischen dem Wischarm 5 und der Wischerwelle 1 mit noch größerer Sicherheit keine Waschflüssigkeit austritt, ist in der bevorzugten Ausführungsform nach Fig. 2 ein erster Dichtungsring 11 über und ein zweiter Dichtungsring 12 unter dem Ringkanal 10 angeordnet.

Um darüber hinaus den Antrieb des Wischarms 5 durch die Wischerwelle 1 auch gegen größeren Widerstand zu gewährleisten, ist vorzugsweise das freie Ende der Wischerwelle 1 mit einem Zahnkranz 13 versehen. In diesen Zahnkranz 13 greift eine (nicht dargestellte) komplementäre Zahnung in der trichterförmigen Öffnung des Wischarms 5 ein. Damit ist eine stabile Antriebsverbindung gegeben, und es kann zu keinem Verrutschen von Wischarm 5 in Bezug auf Wischerwelle 1 mehr kommen.

### BEZUGSZEICHENLISTE

| | |
|---|---|
| 1 | Wischerwelle |
| 2 | axiale Bohrung |
| 3 | Wellenantrieb |
| 4 | Zufuhr für Wischflüssigkeit |
| 5 | Wischarm |
| 6 | Waschdüse |
| 7 | Versorgungsleitung in Wischarm |
| 8 | erste Nut in Wischerwelle |
| 9 | zweite Nut in Wischarm |
| 10 | Ringkanal |
| 11 | erster Dichtungsring |
| 12 | zweiter Dichtungsring |
| 13 | Zahnkranz auf Wischerwelle |
| 14 | Verschraubung von Wischarm auf Wischerwelle |

## Patentansprüche

1. Wischer mit einer Wischerwelle (1) und einem Wischarm (5), der auf der Wischerwelle (1) drehsicher befestigt ist, wobei die Wischerwelle (1) eine durchgehende axiale Bohrung (2) aufweist, die mit mindestens einer Versorgungsleitung (7) verbunden ist, so dass wenigstens einer Waschdüse (6) Waschflüssigkeit zuführbar ist, und wobei die Wischerwelle (1) an ihrem freien Ende konisch zuläuft und eine erste Nut (8) aufweist,
die Versorgungsleitung (7) innerhalb des Wischarms (5) angeordnet ist, und
der Wischarm (5) an seinem zur Berfestigung mit dem freien Ende der Wischerwelle (1) vorgesehenen Befestigungsende trichterförmig zutäuft, **dadurch gekennzeichnet, dass** der Wischarm (5) an dem Befestigungsende eine zweite Nut (9) aufweist und
die erste (8) und die zweite Nut (9) einen wenigstens teilweise umlaufenden Ringkanal (10) an dem Übergang zwischen Wischerwelle (1) und Wischarm (5) bilden, wobei die Versorgungsleitung (7) in dem Wischarm (5) in den Ringkanal (10) mündet, wenn der Wischarm (5) und die Wischerwelle (1) zusammengesetzt sind.

2. Wischer nach Anspruch 1,
**dadurch gekennzeichnet, daß**
ein erster Dichtungsring (11) über und ein zweiter Dichtungsring (12) unter dem Ringkanal (10) angeordnet ist.

3. Wischer nach Anspruch 1 oder 2,
**dadurch gekennzeichnet, daß**
das freie Ende der Wischerwelle (1) mit einem Zahnkranz (13) versehen ist.

## Claims

1. Wiper comprising a wiper shaft (1) and a wiper arm (5) fastened in a rotationally secure manner on the wiper shaft (1), wherein the wiper shaft (1) has a continuous axial bore (2), which is connected to at least one supply line (7) so that at least one wash nozzle (6) can be fed washer fluid, and wherein the wiper shaft (1) is conically tapered at its free end and has a first groove (8), the supply line (7) is disposed within the wiper arm (5), and the wiper arm (5), at its attachment end provided for fastening to the free end of the wiper shaft (1), is tapered in the shape of a funnel,
**characterized in that** the wiper arm (5), at the attachment end, has a second groove (9), and the first (8) and the second groove (9) form an at least partially circumferential annular channel (10) at the transition between the wiper shaft (1) and the wiper arm (5), the supply line (7) in the wiper arm (5) emerging in the annular channel (10) once the wiper arm (5) and the wiper shaft (1) are put together.

2. Wiper according to Claim 1, **characterized in that** a first sealing ring (11) is disposed above and a second sealing ring (12) is disposed below the annular channel (10).

3. Wiper according to Claim 1 or 2, **characterized in that** the free end of the wiper shaft (1) is provided with a gear rim (13).

## Revendications

1. Essuie-glace avec arbre d'essuie-glace (1) et bras d'essuie-glace (5) fixé en rotation à l'arbre d'essuie-glace (1), l'arbre d'essuie-glace (1) présentant un trou axial traversant (2) relié à au moins un tuyau d'alimentation (7), de sorte que du liquide de lavage puisse être amené à au moins un gicleur de lavage (6), et l'arbre d'essuie-glace (1) se terminant son extrémité libre de manière conique et présentant une première encoche (8), le tuyau d'alimentation (7) étant agencé à l'intérieur du bras d'essuie-glace (5) et le bras d'essuie-glace (5) se terminant en entonnoir à son extrémité de fixation prévue pour la fixation à l'extrémité libre de l'arbre d'essuie-glace (1),
**caractérisé en ce que** le bras d'essuie-glace (5), à l'extrémité de fixation, présente une deuxième encoche (9) et la première (8) et la deuxième encoche (9) forment un canal annulaire au moins partiellement périphérique (10) sur le passage entre l'arbre d'essuie-glace (1) et le bras d'essuie-glace (5), le tuyau d'alimentation (7) débouchant, à l'intérieur du bras d'essuie-glace (5), dans le canal annulaire (10) lorsque le bras d'essuie-glace (5) et l'arbre d'essuie-glace (1) sont assemblés.

2. Essuie-glace selon la revendication 1, **caractérisé en ce qu'**un premier joint d'étanchéité (11) est agencé au-dessus du canal annulaire (10) et un deuxième joint d'étanchéité (12) l'est en dessous.

3. Essuie-glace selon la revendication 1 ou 2, **caractérisé en ce que** l'extrémité libre de l'arbre d'essuie-glace (1) est munie d'une louponne dentée (13).
